# EUROPEAN PATENT SPECIFICATION

(11) **EP 0 644 379 B1**
(45) Date of publication and mention of the grant of the patent: **20.05.1998**
(21) Application number: 93830388.0
(22) Date of filing: 22.09.1993
(51) Int. Cl.: F24F 3/16, B03C 3/14

(54) **Air depollution device**
Luftreinigungseinrichtung
Appareil pour purifier l'air

(43) Date of publication of application: 22.03.1995
(73) Proprietor: Vanella, Salvatore, I-61100 Pesaro (IT)
(72) Inventor: Vanella, Salvatore, I-61100 Pesaro (IT)
(74) Representative: Modiano, Guido, Dr.-Ing.

(56) References cited:
- DE-A- 3 728 308
- DE-A- 3 921 387
- GB-A- 2 215 234
- US-A- 4 244 712
- US-A- 5 035 728

## Description

The present invention relates to a device for depolluting air from fumes, dust, toxic gases, viruses, bacteria and the like and for restoring the balance of negative charges in the air.

It is known that living spaces are subject to various forms of pollution, such as industrial emissions, emissions due to traffic and to heating systems, fumes and the like.

In order to remove the pollutants from the air, filters operating according to various physical principles, for example mechanical ones, or according to chemical or electrostatic principles, are currently available. However, these filters are unable to eliminate pathogenic germs from the air and to block smaller particles, for example smaller than one tenth or one hundredth of a micron.

It is also known that, besides air purity, an important factor for physical well-being is constituted by the presence, in said air, of negative ions, which are produced by solar radiation, by moving water masses and by trees. However, air ionization is very limited in enclosed spaces, due both to pollution and to appliances such as air-conditioning systems.

US-A-5 035 728 discloses a single compact air cleaner comprising a mechanical pre-filter screen, then an electrostatic precipitator followed by a main filter cartridge comprising a synthetic mesh media and a screen impregnated with activated carbon powder. The device also comprises a blower and an ionizing element. Furthermore, GB-A-2 215 234 discloses an air filtering apparatus comprising a ultraviolet radiator chamber in order to kill microorganisms.

The aim of the present invention is to solve the above problem, providing a device which allows to fully depollute the air, particularly blocking even the smallest particles and eliminating toxic gases and pathogenic germs, and also allows to appropriately ionize the air.

Within the scope of this aim, a further object of the present invention is to provide an air depollution device which is simple in concept, safely reliable in operation and versatile in use.

This aim and this object are both achieved, according to the invention, by the present air depollution device comprising: a container which has, at opposite ends, an intake grille and an emission grille, both of which are suitable to convey a large stream of air; a mechanical filter and an activated-charcoal filter which are mounted side by side on a frame which is removably inserted inside said container along a plane transverse to said container; a collection device which is arranged downstream of said two filters and has, in succession, an electrification grid which is supplied at high voltage with negative polarity and is arranged on a plane transverse to said container; a partition arranged at an angle in front of said electrification grid so as to convey the stream of air toward at least one narrower region; a negatively charged deflector plate and a positively charged collector plate which face one another at a short distance so as to delimit said respective narrower region; a germicidal lamp which is arranged at an opening of said deflector plate and is suitable to illuminate said collector plate substantially along its entire length in a direction which is transverse to said container; suction means which are suitable to create said stream of air inside said container; and an ionizing element which is arranged at the outgoing stream of air.

The details of the invention will become apparent from the detailed description of preferred embodiments of the air depollution device, illustrated only by way of non-limitative example in the accompanying drawings, wherein:
figure 1 is a partially cutout exploded perspective view of the device according to the invention;
figure 2 is a detailed view of a section of said electrification grid;
figure 3 is a longitudinal sectional view of the device;
figure 4 is a plan view of said collector plate;
figure 5 is a schematic general side view of the device, showing the air flow lines;
figure 6 is a longitudinal sectional view of a different embodiment of the device, particularly meant for installation on motor vehicles;
figures 7 and 8 are schematic views of said device installed inside a motor vehicle and inside the cab of a truck;
figure 9 is a partial longitudinal sectional view of a further embodiment of the device;
figure 10 is a perspective view of an embodiment of the device flush-mounted in a wall-mounted piece of furniture, particularly for the kitchen;
figure 11 is a longitudinal sectional view of said flush-mount device.

With particular reference to the above figures, the reference numeral 1 generally designates the container of the air depollution device. Said container 1 is formed by a base 2 and a cover 3 which are substantially symmetrical with respect to a horizontal joining plane. Conveniently, the container 1 is suitable to be mounted at the top of a stand 4 which can move on wheels 5; however, it can also be fixed to a wall by means of wall brackets.

The base 2 and the cover 3 are respectively provided with an air intake grille 6 and with an emission grille 7 at the rear and front transverse opposite faces. The grilles 6 and 7 have vanes 8 and 9 which are appropriately inclined so as to direct the flow of air.

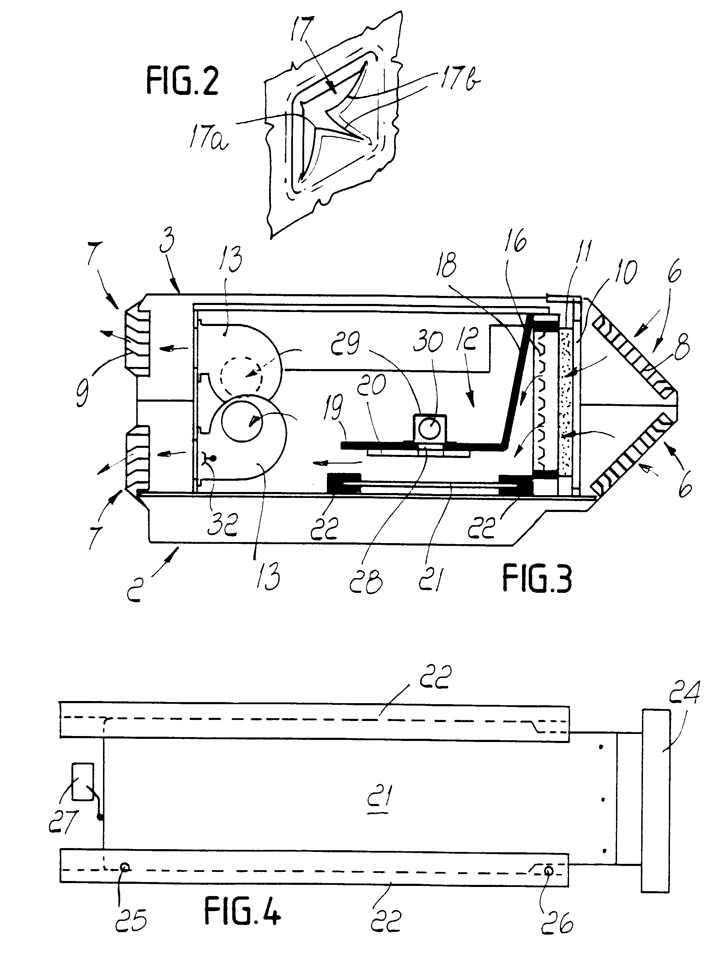

More particularly, the intake grilles 6 are arranged at an angle to one another, substantially at 90°, and their vanes 8 are at right angles to the respective external surface, so as to make the flow of air converge toward the inside of the container 1 (see figure 3); the emission grilles 7 are instead arranged on a vertical plane which is transverse with respect to the container 1, and their vanes 9 are folded so that they diverge with respect to said horizontal joining plane of the base 2 and of the cover 3.

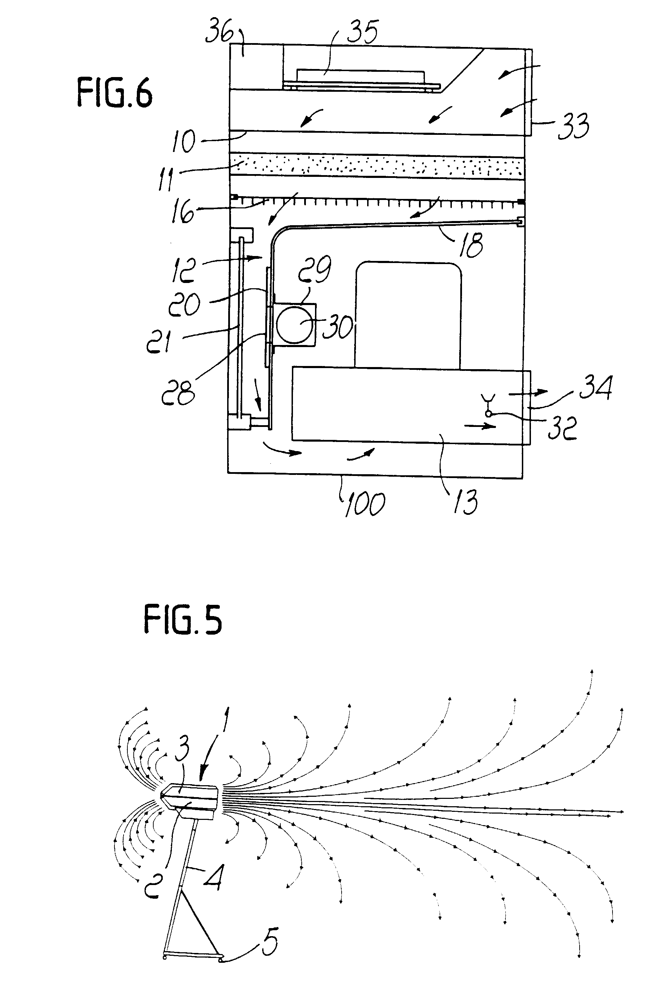

The grilles 6 and 7 are thus suitable to convey a considerable stream of air through the container 1, as shown in figure 5.

A mechanical filter 10, an activated-charcoal filter 11, a collection device 12 and a pair of fans 13 meant to produce the flow of air are arranged in series inside the container 1.

Due to reasons of compactness of the device, the collection device 12 is arranged adjacent to the mechanical filter 10 and to the activated-charcoal filter 11. Actually, any convenient distance can be provided between the collection device and the filters without compromising the depolluting action of the device.

The mechanical filter 10, preferably of the fabric type, and the activated-charcoal filter 11 are supported, side by side, by a frame 14 which is suitable to be inserted between a pair of guides 15 formed inside the container 1, along a vertical plane which is transverse to said container. The frame 14 can be extracted from the container 1 along related guides 15 for periodic operations for cleaning or replacing the mechanical filter 10 and the activated-charcoal filter 11.

The collection device 12 has an electrification grid 16 which is supplied at a high voltage, with negative polarity, and is arranged in front of the frame 14 along a vertical plane which is transverse to the container 1. The electrification grid 16 is formed by a uniform series of blankings 17 provided on a metal plate.

As shown in detail in figure 2, the blankings 17 form a plurality of sharp ridges, practically shaped like spikes, which form respective points 17a at the tip of blades 17b, so as to increase electron emission. Ozone forming furthermore does not occur.

In front of the electrification grid 16 there is a partition 18 made of plastic material and tilted so as to convey the air flow toward the lower part of the container 1. A horizontal wall 19 extends from the partition 18 and is suitable to act as support for an underlying deflector plate 20 to which a negative polarity is applied.

A positively charged collector plate 21 faces the deflector plate 20 in a downward region and at a short distance; the plates 20 and 21 delimit a narrower region of the air flow passage section. The plate 21 is slideably mounted on a pair of guides 22 arranged transversely to the container 1 on a horizontal plane; the plate 21 can be extracted from an opening 23 of the base 2 of the container, by means of an associated handle 24, for periodic cleaning operations.

A pair of contacts 25 and 26 is arranged along one of the guides 22, proximate to the ends; said contacts are suitable to alternatively abut against the collector plate 21. The contact 25 is meant to supply voltage to the collector plate 21 in the position in which it is inserted in the container 1 (see figure 4); the contact 26 is connected to the ground and is meant to discharge the voltage from said plate 21 when it is extracted.

A microswitch 27 is suitable to indicate the correct insertion of the collector plate 21 inside the container 1.

The wall 19 and the deflector plate 20 have an opening 28 which in practice covers their entire length, transversely to the container 1. A channel 29 is fixed above the opening 28 and is suitable to act as seat for a UV-ray neon lamp 30 which has a germicidal function; the lamp 30 is of the type with no ozone emission. The channel 29 is made of metallic material with a shiny internal surface so as to act as parabolic reflector for the light.

Conveniently, the collector plate 21 is made of satin-finished steel in order to avoid the reflecting of the light emitted by the lamp 30. The metal construction of the collector plate 21 and of the channel 29 furthermore ensures that the UV rays generated by the lamp 30 do not cause the plastic materials of the container 1, of the partition 18 and of the wall 19 to crystallize and emit noxious gases; the guides 22 and the handle 24 are also made of plastic materials and are thus insulators.

The fans 13 are fixed to a supporting plate 31 arranged on a vertical plane which is transverse with respect to the container 1, in front of the air emission grilles 7. Conveniently, the fans 13 are arranged symmetrically, so as to cooperate with the vanes 9 of the emission grilles 7 in order to create an outgoing air stream which diverges upward and downward.

An ionizing element 32 is arranged at one of the fans 13 and is constituted by a head with a double point for emitting negative ions, which is placed within the outgoing air stream. The intensity of the ionization is appropriately adjustable by means of a regulator located on the control panel of an electronic unit for controlling the device, not shown in the drawing.

Operation of the device is easily understandable from the above description. The stream of air produced by the fans 13 passes in succession through the mechanical filter 10, the activated-charcoal filter 11 and the collection device 12.

The mechanical filter 10 is suitable to retain particles larger than 200 microns, whereas the activated-charcoal filter 11 is capable of retaining the toxic gases present in the air.

The collection device 12 has the purpose of blocking all smaller particles, down to less than 0.001 microns, as well as viruses, bacteria and similar micro-organisms (spores, molds, yeasts, algae) present in the air. For this purpose, the electrification grid 16, powered with negative voltage, electrifies said particles carried by the air stream passing through it; this electrification is produced by the emission of electrons from the points 17a and the blades 17b of the blankings 17 of the grid 16.

The stream of air is redirected by the partition 18 and conveyed into the narrower region formed between the deflector plate 20 and the collector plate 21. At this region, the particles which have been negatively charged by the electrification grid 16 are repelled by the deflector plate 20, which is equally negatively charged, toward the collector plate 21, which instead attracts them since it is positively charged. The particles and micro-organisms therefore deposit onto the collector plate 21.

The particulate deposited onto the collector plate 21 is illuminated by the germicidal UV-ray lamp 30, which thus kills the micro-organisms present in said particulate.

The fact should be stressed that the irradiation energy of the lamp 30 per unit surface is very high, by virtue of the short distance between said lamp 30 and the collector plate 21, and that the irradiation time is very long, since the micro-organisms are motionless on the collector plate 21. This ensures complete inactivation of the micro-organisms.

The fact should also be stressed that the germicidal lamp 30 is constituted by a neon lamp the length of which is substantially equal to that of the collector plate 21, so as to illuminate the entire plate 21. The germicidal lamp 30 furthermore acts directly on the particulate collected on the plate 21 without the interposition of glass plates or the like.

In summary, the described device allows to totally depollute the air in living spaces, blocking even the smallest particles and eliminating toxic gases and pathogenic germs.

The ionizer 32 furthermore enriches the outgoing clean air with negative ions, in an appropriately adjustable manner, thus increasing the obtainable benefits.

Figures 6, 7 and 8 illustrate a different embodiment of the device, meant for installation on motor vehicles and the like. The device has a container 100 which has, at its opposite ends, an intake 33 and an outlet 34 for the stream of air produced by a fan 13; the ionization element 32 is placed within the stream of air leaving the fan 13.

Conveniently, said stream of air is made proportional to the speed of the vehicle by acting on the fan 13 by means of an electronic circuit 35. Said electronic circuit 35 is powered by an electric power supply 36 which also powers the live parts of the device.

A mechanical filter 10, an activated-charcoal filter 11 and a collection device 12, designated by the same reference numerals used earlier for the sake of clarity, are arranged in series inside the container 100.

In particular, the collection device 12 has an electrification grid 16 which is supplied with electricity of negative polarity, a partition 18 which is arranged so as to convey the flow of air toward a narrower region formed between a negatively charged deflector plate 20 and a positively charged collector plate 21 which face each other at a short distance. The collector plate 21 is illuminated, substantially along its entire length, by the germicidal lamp 30 arranged at the opening 28 of the deflector plate 20.

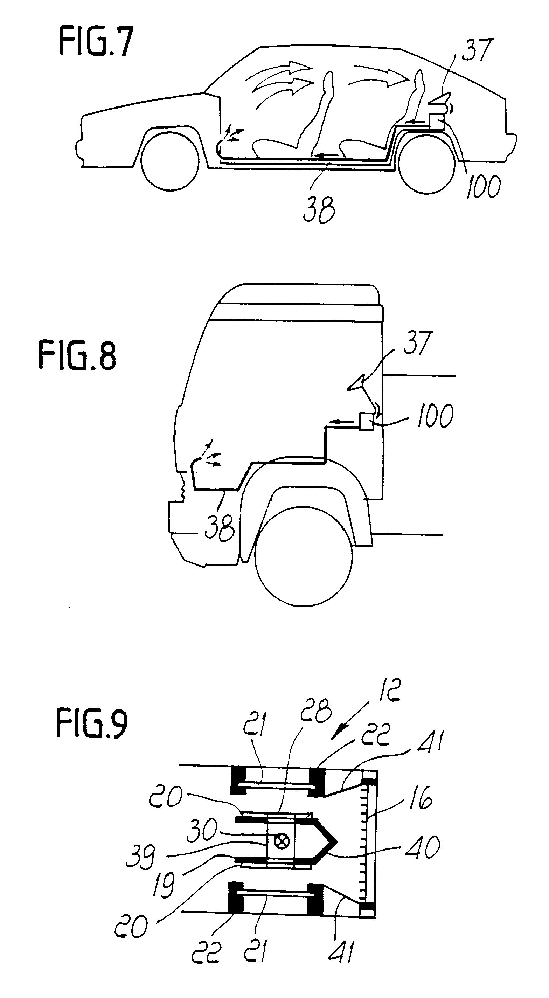

The container 100 is preferably arranged in the rear part of the motor vehicle, for example inside the trunk, in a region which is concealed yet, at the same time, accessible for the removal of the filters 10 and 11 and of the collector plate 21 for periodic cleaning operations (figure 7).

The container 100 is connected to an internal air intake 37, which is mounted for example on the rear dashboard, and to a duct 38 for delivering the depolluted air to the vents provided at the front of the motor vehicle. In particular, said vents can be those of the air-conditioning system of the motor vehicle.

In this case, the device operates with internal recirculation, i.e. by acting only on the air present inside the passenger compartment, as well as on the air filtering through the cracks; conveniently, it is possible to provide for the automatic periodic opening of the outside air intakes, controlled for example by a sensor which measures the amount of oxygen present in the air. The device can be installed upstream or downstream of the air-conditioning unit and may have no fan if the fan present in the air-conditioning unit is used.

The device can treat all or only part of the air treated by the air-conditioning unit. The amount of air treated can furthermore be reduced appropriately after an adequate depollution period, since only the air filtering through the cracks must be depolluted.

It is furthermore possible to make the container 100 removable from the trunk of the motor vehicle, for independent use of said device, which must be connected to an appropriate direct-current power supply.

In a similar manner, if the device is installed in the cab of a truck, the container 100 is preferably arranged in the rear region of said cab and is similarly connected to the air intake 37 and to the delivery duct 38 (figure 8).

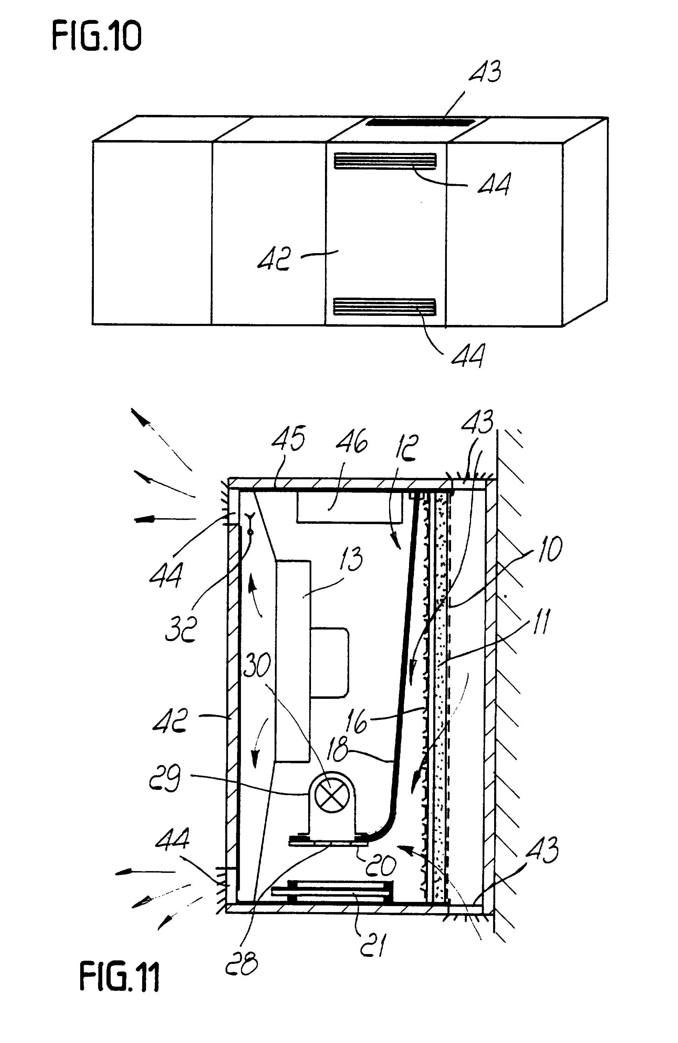

In the embodiment schematically illustrated in figure 9, the collection device of the depollution device, again generally designated by the reference numeral 12, has two narrower air passage regions. Said regions are delimited by respective deflector and collector plates 20 and 21 and are symmetrical with respect to a single germicidal lamp 30.

In this further embodiment, the lamp 30 is located between two walls 19 which support the related deflector plate 20, at the opening 28 which passes through said plate and said wall 19; it is furthermore located in a compartment formed by a pair of dividers 39. The two walls 19 are mutually joined by a two-leaf partition 40; the two leaves converge toward the single electrification grid 16 and, by cooperating with the two surfaces 41 which diverge from the same grille, divide the flow of air passing through the grille.

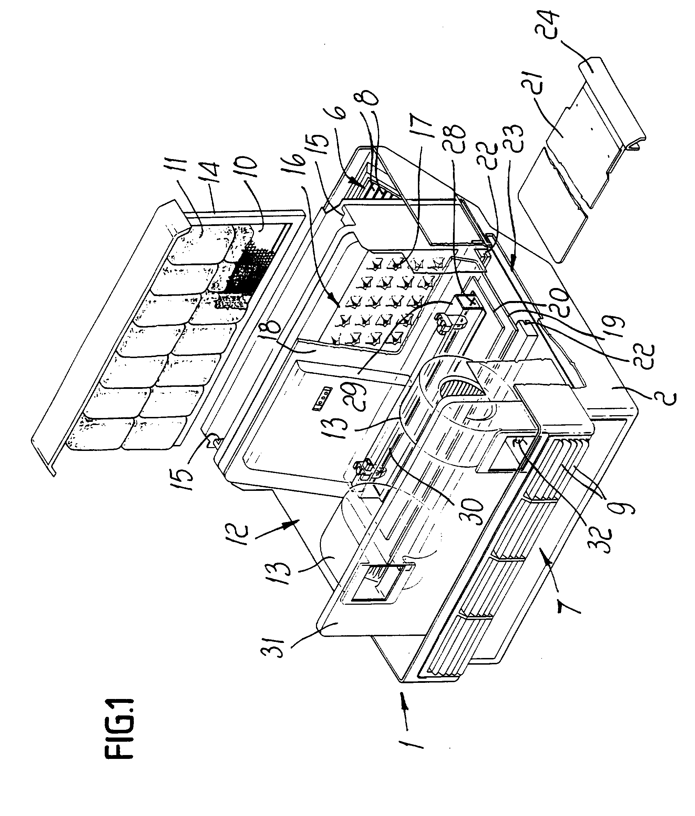

The collection device of figure 9 has, with respect to those of figures 1, 3 and 6, twice the number of narrower sections and collector plates 21, and therefore achieves better efficiency with respect to said devices in terms of the amount of particulate collected. For an equal flow of air passing, in the unit time, through the device of figure 3 and through the device of figure 9, the air speed in each narrower section of the latter device is in fact half that of the air in the single section of the device of figure 3; since the air speed is lower, the overall amount of particles collected in the unit time is larger.

Figures 10 and 11 illustrate a further embodiment of the device, meant for flush-mounting in a wall-mounted piece of furniture 42, particularly for kitchens. In figure 10, the wall-mounted piece of furniture 42 is shown in thicker lines, inserted between other wall-mounted pieces of furniture for the kitchen. The wall-mounted piece of furniture 42 has a pair of intake grilles 43 on its upper and lower faces and a pair of emission grilles 44 on its front face.

The arrangement of the grilles 43 and 44 and the inclination of the related vanes are such as to convey an intense stream of air, in practice allowing to treat all the air of the enclosed space.

The device has a container 45 which is suitable to be flush-mounted inside the wall-mounted piece of furniture 42 and has, at the grilles 43 and 44, related intake and emission ports for the stream of air produced by a fan 13; the ionization element 32 is arranged at the air stream which leaves the fan 13.

A mechanical filter 10, an activated-charcoal filter 11 and a collection device 12, designated by the same reference numerals used earlier for the sake of clarity, are arranged in series inside the container 45.

In particular, the collection device 12 has an electrification grid 16, which is supplied with negative polarity, and a partition 18, which is arranged so as to convey the stream of air toward a narrower region formed between a negatively charged deflector plate 20 and a positively charged collector plate 21 which face one another at a short mutual distance.

The collector plate 21 is illuminated, substantially along its entire length, by the germicidal lamp 30 arranged inside the channel 29 formed by the partition 18, at the opening 28 of the deflector plate 20.

The reference numeral 46 designates the electric power supply that powers the live parts of the device.

The device can be placed in any point of the kitchen, particularly using the conventional hood arranged above the cooking range. This device allows to depollute the most polluted room in an apartment, since not only noxious agents of external origin but also agents due to the cooking of food and to the combustion of gas circulate inside this room. For example, the evaporation of water, rich in chloride and other highly volatile noxious components, considerably contributes to pollution.

The device effectively replaces conventional discharge hoods, which are provided with a fan and are connected to an external discharge duct, or recirculation hoods, which comprise an activated-charcoal filter. Such conventional hoods are in fact unable to eliminate all the pollutants present in the room and can instead lead to the forming of bacterial colonies.

It is naturally also possible to use the depollution device for flush-mounting in rooms other than the kitchen, in which wall-mounted pieces of furniture are similarly used.

In the practical embodiment of the invention, the materials employed, as well as the shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Air depollution device, comprising a container (1) which has, at opposite ends, an intake grille (6) and an emission grille (7), both of which are suitable to convey a large stream of air; a mechanical filter (10) and an activated-charcoal filter (11) which are mounted side by side on a frame (14) which is removably inserted inside said container, along a plane transverse to said container; a collection device (12) which is arranged downstream of said two filters and has, in succession, an electrification grid (16) which is supplied with a high voltage of negative polarity and is arranged on a plane transverse to said container; a partition (18) arranged at an angle in front of said electrification grid so as to convey the stream of air toward at least one narrower region; a negatively charged deflector plate (20) and a positively charged collector plate (21) which face one another at a short distance so as to delimit said respective narrower region; a germicidal lamp (30) which is arranged at an opening (28) of said deflector plate and is suitable to illuminate said collector plate substantially along its entire length in a direction which is transverse to said container; suction means (13) which are suitable to create said stream of air inside said container; and an ionizing element (32) which is arranged at the outgoing stream of air.

2. Device according to claim 1, characterized in that it has a pair of intake grilles (6) which are inclined with respect to one another and provided with vanes (8) arranged at right angles to the respective external surface, so as to make the incoming air stream converge toward the inside of said container.

3. Device according to claim 1, characterized in that it has a pair of emission grilles (7) which are arranged on a plane transverse to said container and are provided with vanes (9) which are folded so as to mutually diverge for the upward and downward diffusion of the outgoing air stream.

4. Device according to claim 1, characterized in that said electrification grid (16) has a uniform series of blankings (17) which are formed on a metal plate and are suitable to produce a plurality of sharp ridges (17a), practically shaped like spikes, which form respective points at the tip of related blades (17b).

5. Device according to claim 1, characterized in that said collector plate (21) is slideably mounted on a pair of guides (22) arranged transversely to said container and can be removed from an opening of said container (1), electric contacts (25, 26) being arranged proximate to the ends of said guides and being suitable to alternately abut against said collector plate, respectively to supply voltage to it in the position in which it is inserted in said container, and to connect it to the ground when it is extracted from said container.

6. Device according to claim 1, characterized in that said collector plate (21) is made of satin-finished steel so as to avoid reflecting the light emitted by said germicidal lamp.

7. Device according to claim 1, characterized in that it has a channel (29) fixed above said opening (28) of said deflector plate (20), along the entire length thereof, said channel constituting a seat for said germicidal lamp (30) and being made of a metallic material the internal surface of which is shiny so as to act as parabolic reflector for the light emitted by said germicidal lamp.

8. Device according to claim 1, characterized in that said germicidal lamp (30), of the UV-ray type, is arranged at a short distance from said collector plate (20), in order to provide intense irradiation energy per unit surface of said collector plate.

9. Device according to claim 1, characterized in that said ionization element (32) is constituted by a head with two points for emitting negative ions and has an ionization intensity which can be adjusted by means of a regulator located on the control panel of an electronic unit for controlling said device.

10. Device according to claim 1, characterized in that said suction means (13) have a pair of fans arranged symmetrically in front of said emission grille (7) so as to cooperate in creating an outgoing stream of air which diverges upward and downward.

11. Device according to claim 1, characterized in that said container (100) is arranged inside a motor vehicle, in an accessible position for removing said mechanical (10) and activated-charcoal filters (11) and said collector plate (21), and is connected to an air intake (37) located inside the passenger compartment of said motor vehicle and to a duct (38) for delivering the depolluted air to appropriate vents provided inside said passenger compartment.

12. Device according to claim 1, characterized in that said collection device (12) comprises said electrification grid (16), a two-leaf partition (40) cooperating with a pair of surfaces (41) which diverge from said grille so as to convey the stream of air toward two narrower regions, each of which is delimited by said respective deflector plate (20) and said respective collector plate (21).

13. Device according to claim 1, characterized in that said container is flush-mounted inside a wall-mounted piece of furniture (42) which has respective intake grilles (43) on its upper and lower faces and at least one grille (44) for the emission of the air stream on its front face.

## Patentansprüche

1. Luftreinigungseinrichtung, die enthält:
einen Behälter (1), der an gegenüberliegenden Seiten ein Einströmgitter (6) und ein Ausströmgitter (7) aufweist, die beide dazu geeignet sind, einen großen Luftsstrom durchzuleiten;
einen mechanischen Filter (10) und einen Aktivkohlefilter (11), die Seite an Seite in einem Rahmen (14) angeordnet sind, der entlang einer quer zum Behälter verlaufenden Ebene auswechselbar in diesen eingeschoben ist;
eine Sammeleinrichtung (12), die in Strömungsrichtung nach den zwei Filtern angeordnet ist, und an diese anschließend ein Elektrifiziergitter (16) hat, das von einer Hochspannung negativer Polarität versorgt wird und in einer Ebene quer zum Behälter angeordnet ist;
eine Trennwand (18), die unter einem Winkel vor dem Elektrifiziergitter angeordnet ist, um den Luftstrom in Richtung zumindest eines schmaleren Bereichs zu leiten;
eine negativ geladenen Ablenkplatte (20) und eine positiv geladenen Sammelplatte (21), die sich in engem Abstand gegenüberliegend angeordnet sind, so daß sie den entsprechenden schmaleren Bereich begrenzen;
eine keimtötende Lampe (30), die an einer Öffnung (28) der Ablenkplatte angeordnet ist und dazu geeignet ist, die Sammelplatte im wesentlichen entlang ihrer ganzen Länge in einer Richtung, die quer zum Behälter ist, zu beleuchten;
Saugmittel (13), die dazu geeignet sind, innerhalb des Behälters den Luftstrom zu erzeugen;
und ein lonisierelement (32), das im austretenden Luftstrom angeordnet ist.

2. Einrichtung nach Anspruch 1, dadurch gekennzeichnet, daß sie ein Paar von Einströmgittern (6) hat, die gegeneinander geneigt sind und mit Lamellen (8) ausgestattet sind, welche rechtwinklig zu der jeweiligen Außenfläche angeordnet sind, um zu bewirken, daß der eintretende Luftstrom gegen die Innenseite des Behälters hin zusammenläuft.

3. Einrichtung nach Anspruch 1, dadurch gekennzeichnet, daß sie ein Paar von Ausströmgittern (7) hat, die in einer Ebene quer zum Behälter angeordnet sind und mit Lamellen (9) ausgestattet sind, welche so geformt sind, daß sie zur Zerstreuung des austretenden Luftstroms nach oben und unten wechselseitig auseinanderlaufen.

4. Einrichtung nach Anspruch 1, dadurch gekennzeichnet, daß das Elektrifiziergitter (16) eine gleichförmige Abfolge von Ausstanzungen (17) hat, die aus einer Metallplatte ausgebildet und dazu geeignet sind, eine Vielzahl von scharfen Vorsprüngen (17a), die praktisch wie Spitzen geformt sind, auszubilden, die an den oberen Enden ihrer Schneiden (17b) entsprechende Spitzen ausbilden.

5. Einrichtung nach Anspruch 1, dadurch gekennzeichnet, daß die Sammelplatte (21) verschiebbar in einem Paar von Führungen (22), die quer zum Behälter angeordnet sind, gelagert ist, und die durch eine Öffnung des Behälters (1) entfernt werden kann, daß elektrische Kontakte (25, 26) nahe zu den Enden der Führungen angeordnet und dazu geeignet sind, abwechselnd an die Sammelplatte anzustoßen, um sie entweder in der in den Behälter eingeführten Position mit Spannung zu versorgen oder sie mit dem Massepotential zu verbinden, wenn sie aus dem Behälter herausgenommen wird.

6. Einrichtung nach Anspruch 1, dadurch gekennzeichnet, daß die Sammelplatte (21) aus einem Stahl mit matter Oberfläche gefertigt ist, um eine Reflexion des von der keimtötenden Lampe abgestrahlten Lichts zu verhindem.

7. Einrichtung nach Anspruch 1, dadurch gekennzeichnet, daß sie einen Kanal (29) hat, der über der Öffnung (28) der Ablenkplatte (20) befestigt ist, welcher entlang seiner ganzen Länge eine Fassung für die keimtötende Lampe (30) ausbildet und der aus einem metallischem Material ist, dessen Innenfläche glänzend ist, um als Parabolspiegel für das von der keimtötenden Lampe abgestrahlte Licht zu dienen.

8. Einrichtung nach Anspruch 1, dadurch gekennzeichnet, daß die keimtötende Lampe (30), die vom Typ eines UV-Strahlers ist, eng beabstandet zur Sammelplatte (20) angeordnet ist, um eine intensive Bestrahlungsenergie pro Oberflächeneinheit der Sammelplatte zur Verfügung zu stellen.

9. Einrichtung nach Anspruch 1, dadurch gekennzeichnet, daß das lonisierungselement (32) durch einen Kopf mit zwei Spitzen zur Emission negativer Ionen gebildet ist und eine lonisationsstärke hat, die durch einen Regler, der auf der Steuertafel einer elektronischen Einheit zur Steuerung der Einrichtung angeordnet ist, eingestellt werden kann.

10. Einrichtung nach Anspruch 1, dadurch gekennzeichnet, daß die Saugmittel (13) ein Paar von Ventilatoren haben, die symmetrisch vor dem Ausströmgitter (7) angeordnet sind, um zusammenzuwirken, um einen austretenden Luftstrom zu erzeugen, der nach oben und unten auseinanderläuft.

11. Einrichtung nach Anspruch 1, dadurch gekennzeichnet, daß der Behälter (100) im Inneren eines Kraftfahrzeugs in einer Position angeordnet ist, die zur Auswechslung des mechanischen Filters (10) und des Aktivkohlefilters (11) und der Sammelplatte (21) zugänglich ist, und der mit einem sich im Passagierraum des Kraftfahrzeugs befindlichen Lufteinlaß (37) und mit einer Leitung (38) zur Beförderung der gereinigten Luft zu entsprechenden Schlitzen, die innerhalb des Passagierraums angeordnet sind, verbunden ist.

12. Einrichtung nach Anspruch 1, dadurch gekennzeichnet, daß die Sammelvorrichtung (12) das Elektrifiziergitter (16) und eine zweilagige Trennwand (40) umfaßt, die mit einem Paar von Flächen (41), die gegenüber dem Gitter geneigt sind, zusammenwirkt, um den Luftstrom in Richtung auf zwei schmalere Bereiche zu leiten, von denen jeder durch die jeweilige Ablenkplatte (20) und die jeweilige Sammelplatte (21) begrenzt wird.

13. Einrichtung nach Anspruch 1, dadurch gekennzeichnet, daß der Behälter bündig in ein an einer Wand angebrachtes Möbelstück (42) eingebaut ist, welches entsprechende Einströmgitter (43) an seiner Ober- und Unterseite und zumindest ein Gitter (44) zur Emission des Luftstroms an seiner Vorderseite hat.

## Revendications

1. Appareil de purification d'air comprenant: une caisse (1) qui comporte, à ses extrémités opposées, une grille d'admission (6) et une grille d'émission (7), toutes deux étant appropriées pour laisser passer un important courant d'air; un filtre mécanique (10) et une filtre (11) à charbon actif montés côte à côte sur un cadre (14) qui est inséré de façon amovible à l'intérieur de ladite caisse, le long d'un plan transversal à ladite caisse; un dispositif de collecte (12) qui est disposé en aval des deux filtres précités et comporte, successivement, une grille d'électrification (16) qui est alimentée avec une haute tension de polarité négative et est disposée dans un plan transversal à ladite caisse; une cloison (18) disposée suivant un certain angle en avant de ladite grille d'électrification de manière à acheminer le courant d'air vers au moins une région plus étroite; une plaque déflectrice (20) chargée négativement et une plaque collectrice (21) chargée positivement qui sont en face l'une de l'autre, à une faible distance, de manière à délimiter ladite région plus étroite respective; une lampe germicide (30) qui est disposée à une ouverture (28) de ladite plaque déflectrice et est appropriée pour éclairer ladite plaque collectrice sensiblement sur toute sa longueur dans une direction qui est transversale à ladite caisse; des moyens d'aspiration (13) qui sont appropriés pour créer ledit courant d'air à l'intérieur de ladite caisse; et un élément ionisant (32) qui est disposé à l'endroit du courant d'air sortant.

2. Dispositif selon la revendication 1, caractérisé en ce qu'il comporte une paire de grilles d'admission (6) qui sont inclinées l'une par rapport à l'autre et sont pourvues d'ailettes (8) disposées perpendiculairement à la surface extérieure respective de manière à faire converger le courant d'air entrant vers l'intérieur de ladite caisse.

3. Dispositif selon la revendication 1, caractérisé en ce qu'il comporte une paire de grilles d'émission (7) qui sont disposées dans un plan transversal à ladite caisse et sont pourvues d'ailettes (9) qui sont pliées, de manière à diverger mutuellement pour diffuser, vers le haut et vers le bas, le courant d'air sortant.

4. Dispositif selon la revendication 1, caractérisé en ce que ladite grille d'électrification (16) présente une série uniforme de jours (17) qui sont formés dans une plaque métallique et sont appropriés pour créer une pluralité de crêtes aiguës (17a), en forme pratiquement de pics, qui forment des pointes respectives aux extrémités d'ailes correspondantes (17b).

5. Dispositif selon la revendication 1, caractérisé en ce que ladite plaque collectrice (21) est montée de façon coulissante sur une paire de guides (22) disposés transversalement à ladite caisse et peut être extraite par une ouverture de ladite caisse (1), des contacts électriques (25, 26) étant disposés à proximité des extrémités desdits guides et étant appropriés pour buter alternativement contre ladite plaque collectrice, de manière à lui fournir, respectivement, une tension dans la position dans laquelle elle est insérée dans ladite caisse, et à la connecter à la terre quand on l'extrait de ladite caisse.

6. Dispositif selon la revendication 1, caractérisé en ce que ladite plaque collectrice (21) est formée d'acier dépoli afin d'éviter la réflexion de la lumière émise par ladite lampe germicide.

7. Dispositif selon la revendication 1, caractérisé en ce qu'il comprend un profilé en U (20) fixé au-dessus ladite ouverture (28) de ladite plaque déflectrice (20), sur toute la longueur de cette dernière, ledit profilé en U constituant un logement destiné à ladite lampe germicide (30) et étant formé d'une matériau métallique dont la surface interne est brillante, afin d'agir comme un réflecteur parabolique vis-à-vis de la lumière émise par ladite lampe germicide.

8. Dispositif selon la revendication 1, caractérisé en ce que ladite lampe germicide (30), du type à rayon UV, est disposée à une faible distance de ladite plaque collectrice (20) afin de fournir une énergie de rayonnement intense par unité de surface de ladite plaque collectrice.

9. Dispositif selon la revendication 1, caractérisé en ce que ledit élément ionisant (32) est constitué par une tête comportant deux pointes destinées à émettre des ions négatifs et présente une intensité d'ionisation que l'on peut ajuster au moyen d'un régulateur placé sur le tableau de commande d'une unité électronique permettant de commander ledit dispositif.

10. Dispositif selon la revendication 1, caractérisé en ce que lesdits moyens d'aspiration (13) comportent une paire de ventilateurs disposés symétriquement en avant de ladite grille d'émission (7) afin de coopérer en créant un courant d'air sortant qui diverge vers le haut et vers le bas.

11. Dispositif selon la revendication 1, caractérisé en ce que ladite caisse (100) est disposée à l'intérieur d'un véhicule à moteur, dans un endroit accessible permettant de retirer lesdits filtres mécanique (10) et à charbon actif (11) et ladite plaque collectrice (21), et est connectée à une admission d'air (37) placée à l'intérieur du compartiment à passagers dudit véhicule à moteur et à un conduit (38) destiné à délivrer l'air purifié à des évents appropriés présents à l'intérieur dudit compartiment à passagers.

12. Dispositif selon la revendication 1, caractérisé en ce que ledit dispositif collecteur (12) comprend ladite grille d'électrification (16), une cloison (40) à deux feuilles, qui coopère avec une paire de surfaces (41) qui divergent de ladite grille de manière à acheminer le courant d'air vers deux régions plus étroites dont chacune est délimitée par ladite plaque déflectrice respective (20) et ladite plaque collectrice respective (21).

13. Dispositif selon la revendication 1, caractérisé en ce que ladite caisse est montée de niveau à l'intérieur d'un pièce murale de meuble (42) qui comporte des grilles d'admission respectives (43) sur ses faces supérieure et inférieure et au moins une grille (44) destinée à l'émission du courant d'air sur sa face avant.
